# EUROPEAN PATENT SPECIFICATION

(11) **EP 3 957 456 B1**
(45) Date of publication and mention of the grant of the patent: **17.06.2026**
(21) Application number: 20790981.3
(22) Date of filing: 20.04.2020
(51) Int. Cl.: B29C 44/18, B29C 44/02, F03D 1/06, B32B 33/00, F03D 3/06, B29C 70/44, B29C 44/12, B29C 44/44, B29C 70/86

(54) **ORTHOGONAL STRUCTURAL COMPONENT IN MULTI-CORE FIBER COMPOSITE MATERIAL, MANUFACTURING TECHNIQUE, AND THIN FILM MATERIAL**
ORTHOGONALE STRUKTURKOMPONENTE IN EINEM MEHRADRIGEN FASERVERBUNDWERKSTOFF, HERSTELLUNGSVERFAHREN UND DÜNNSCHICHTMATERIAL
COMPOSANT STRUCTUREL ORTHOGONAL DANS UN MATÉRIAU COMPOSITE À FIBRES MULTIC URS, TECHNIQUE DE FABRICATION ET MATÉRIAU DE FILM MINCE

(30) Priority: 18.04.2019 CN 201910311818
(43) Date of publication of application: 23.02.2022
(73) Proprietor: American Investmint Corp, New York, New York 10010 (US)
(72) Inventor: CHOE, Jerry, New York, NY 10010 (US)
(74) Representative: Ström & Gulliksson AB
(86) International application number: PCT/IB2020/053723
(87) International publication number: WO 2020/212959

(56) References cited:
- EP-B1- 0 707 537
- WO-A1-2015/177473
- WO-A1-2017/202827
- RU-C1- 2 350 757
- US-A- 4 330 494
- US-B1- 6 358 459

## Description

### Technical Field

The invention belongs to the technical field of processing and manufacturing of fiber composite material.

### BACKGROUND

With the economic level and technological level all over the world increasing gradually, people have put forward more requirements on the strength, weight and use performance of plates of various existing equipment or sites. For example, the plates used as floors, sidings, or ceilings of workshops or houses, or the plates used for engineering vehicles or shells of industrial equipment are generally made of metal or non-metallic material (such as plastic), which causes the technical problems such as high labor load of workers in the site, hidden safety dangers, high construction difficulty during installation. There are also the problems during use that the plates are prone to corroding and deforming, the strength cannot meet the demand, and the anti-seismic property is low. In order to solve these problems, manufacturers have developed substitutes based on fiber composite material. In addition to excellent mechanical strength, these plate products made of fiber composite material have many properties which existing metal or plastic plates do not have, such as high tensile strength, good corrosion resistance, and excellent anti-seismic property and impact resistance advantage. However, due to the limitation of structure, process and other aspects, there are still some problems in the use of existing plates made of fiber composite material. For example, in the application of blades and various turbine blades, existing blades made of fiber composite material are generally solid or of hollow structures or of split single-core structures, and thus there are still some problems of high weight, insufficient strength, poor seismic performance, large starting torque, insufficient stability and the like. A detailed introduction to the advantages and disadvantages of various existing technologies is given as follows, with the current status of technology development of blades of wind-driven generators as an example. People's need for clean energy will get into the stage of leap-forward development with the promotion of pressure of climate deterioration and environmental protection. According to International Wind Energy Commission, it is estimated that the global wind power generation capacity will grow to 1,000 GW in 2022. Therefore, the international market for wind power generation equipment is huge, and the current production cost of blades accounts for about 15% of the total cost of wind power generation equipment, which means that the blade, as the key component of wind power generation equipment, will have a market share of $ 15 billion.

The primitive wind power generation equipment adopts the blade of a single structure, and thus the equipment has the problems of being insufficient in strength, prone to breaking and failing and the like. Based on the modern design concept, the winds are used as the basic structure of the blades, which causes the defects such as incapacity to effectively capture wind energy, high wind speed (at least 22 miles per hour), and high starting torque. The current main design scheme is to use aero foil-shaped blades of a semi-core structure. Each blade includes two independently-formed half blades, and the two half blades are bonded through a foaming material arranged between the half blades. The foaming plastic structure arranged in the middle of each blade can reduce vibration and noise and increase the stability of the blade. However, due to the split blade structure, this blade has the disadvantages of being prone to cracking along the joint, insufficient in mechanical strength and the like. According to the survey, about 100,000 blades of a semi-core structure on large-sized wind turbine generator systems need to be repaired or replaced at present, and thus maintenance costs are huge in the later period.

On the other hand, due to the huge domestic energy consumption, some companies aim of developing wind energy solutions about low wind speed and low altitude. For example, supposing that the annual energy consumption cost of a master of the house in American, including fuel oil and gas, is about $ 15,000, and the current installation cost of a 5 kW wind turbine generator system on the market is about $ 7,500, if the family uses wind energy, they will get $ 7,500 in annual revenue with application of clean energy. In residential and commercial buildings, the low-speed wind energy market is huge, but there is no feasible solution at present.

In the United States, about 75 million single-detached homes, 30 million apartment buildings and 6 million office buildings can be equipped with low-speed wind power generation equipment, and the potential market income exceeds 560 billion per year. There are about 75 million independent residential houses in the United States, with an average energy consumption of $ 2,400 per year. If it is calculated in terms of installing wind power generation equipment which can make a profit about 50% of the average annual energy consumption or can get a profit of $ 1,200 per year, the annual national income will be $ 180 billion after three years. For the 3 million apartment buildings, supposing that each apartment building has 20 houses, the average energy consumption is $ 20,000 per year, and it is calculated in terms of the income of $ 10,000 year, the market demand is $ 300 billion per year. Low-wind speed and low-altitude wind power generation can also be applied in commercial office buildings. With an average energy consumption of $ 30,600, based on the scale of 5.6 million commercial office buildings in the United States in 2012, the potential market capacity is $ 86 billion per year. With the suggestion of clean energy, governments of the world will give great impetus to or implement by force utilization of renewable energy in the near future, and therefore, it will be great social and economic significance to develop a wind power generation blade which is high in efficiency, low in energy consumption and failure rate, and suitable for low wind speed and low altitude power generation. Meanwhile, a structural member with higher mechanical strength, better seismic performance, more perfect mechanical structure and more excellent strength-to-weight ratio (strength/weight), such as plates, and a corresponding processing technology are being developed, which will have an important meaning in the progressiveness of social economy and technological development.

US 6 358 459 B1 and US 4 330 494 A disclose methods for manufacturing structural members comprising foam and composite material.

### SUMMARY OF THE INVENTION

In view of the technical problems in the prior art, based on theoretical analysis and on-site practice, the present invention provides a manufacturing process. An orthogonal structural member in the multi-chamber fiber composite material can be used as blades of wind turbine generator systems with various sizes and wind speeds or other plates with high strength requirements or other application environments, which helps to improve the mechanical strength of equipment, reduce energy consumption of equipment, and enlarge the scope of application of equipment, and improve the usability of existing equipment or facilities.

A manufacturing process of an orthogonal structural member in a multi-chamber fiber composite material provided by the present invention is as follows: a manufacturing process of an orthogonal structural member in a multi-chamber fiber composite material comprises the following steps of preparing preformed core bodies, wherein a film material is used for making a foaming material chamber for containing a foaming material, and the foaming material chamber is filled with a proper amount of foaming material to prepare the preformed core bodies; performing die-filling on the preformed core bodies, wherein several preformed core bodies prepared in the step of preparing the preformed core bodies are placed into a die according to a predetermined spatial layout, and each preformed core body is encapsulated with a layer of fiber material; integrally forming a fiber shell and a core structure, wherein the temperature of a die cavity is increased, under the effect of expansion pressure of the foaming material, the chamber walls and the structural panels are synchronously formed to form a structural member shell with at least two chambers; and meanwhile, the foaming material in the preformed core bodies expands and fills each chamber, so as to form a multi-chamber space structure, orthogonal to the structural panels, in the chamber walls.

Preferably, in the manufacture process of the orthogonal structural member in the multi-chamber fiber composite material provided by the present invention, the film material may adopt various layers, such as optical film, composite film, superconducting film, polyester film, nylon film, plastic film, fiber film, wax paper film and film made of foaming material. As long as the film has good molding characteristics and can be used for producing preformed core bodies with appropriate shapes according to the specific structure of the orthogonal structural member in the multi-chamber fiber composite material, the layer can be applied to the step of preparing the preformed core bodies.

Further preferably, the film material adopted in the manufacture process of the orthogonal structural member in the multi-chamber fiber composite material provided by the present invention includes a wax film resin layer, an adhesive resin layer and a foaming material polymer resin mixture layer; and the foaming material polymer resin mixture layer is formed by being coated with a foaming material polymer resin mixture, and the foaming material polymer resin mixture comprises a foaming material with the volume fraction not less than 65%. The foaming material polymer resin mixture is preferably a resin gel containing a hydrocarbon solvent, such as ethylene-vinyl acetate copolymer, used for preventing the foaming material from degrading and shrinking in the process of heating and curing the layer of fiber material. The film material with the wax film resin layer, the adhesive resin layer and the foaming material polymer resin mixture layer not only has good molding characteristic, but also can be used for producing the preformed core bodies with appropriate shapes according to the specific structure of the orthogonal structural member in the multi-chamber fiber composite material and can prevent the foaming material from degrading and shrinking in the process of heating and curing the layer of fiber material.

Further preferably, the film material adopted in the manufacture process of the orthogonal structural member in the multi-chamber fiber composite material provided by the present invention includes a viscous adhesive layer and a water-insoluble wax film layer with polymer adhesive, wherein the viscous adhesive layer includes a solvent carrier, a foaming material, a water-insoluble expandable viscous polymer adhesive and a thermosensitive molding resin, and the volume fraction of the foaming material to the solvent carrier is not less than 50%. Preferably, in the manufacture process of the orthogonal structural member in the multi-chamber fiber composite material mentioned above, the monomer particles of the foamed material are of a microcapsule structure, wherein the microcapsule structure includes a capsule shell made of plastic material, and

An orthogonal structural member in a multi-chamber fiber composite material provided by the present disclosure is as follows: an orthogonal structural member in a multi-chamber fiber composite material includes a shell, and is characterized in that the shell comprises several structural panels and at least two chambers arranged between the structural panels, wherein the chamber walls are arranged between every two adjacent chambers and are orthogonal to the structural panels, and the shell and the chamber walls are made of carbon fiber material or glass fiber material; the chambers are internally provided with cores made of foam plastic; and the structural panels, the chambers, the chamber walls and the cores are integrally formed by a thermal forming process of fiber material and foam plastic.

As the preferred orthogonal structural member in the multi-chamber fiber composite material of the present disclosure, the structural panels, the chambers, the chamber walls and the cores are integrally formed through the manufacture process of the orthogonal structural member in the multi-chamber fiber composite material mentioned in any technical scheme above.

As the preferred orthogonal structural member in the multi-chamber fiber composite material of the present disclosure, the orthogonal structural member in the multi-chamber fiber composite material is a blade-shaped structure, and the structural panels are blade-shaped panels.

As the preferred orthogonal structural member in the multi-chamber fiber composite material of the present disclosure, the shell is in a fan shape, wherein the chambers extend in the radial direction of the shell and are evenly distributed in the circumferential direction of the shell; or, the chambers extend in the circumferential direction of the shell and are evenly distributed in the radial direction of the shell.

As the preferred orthogonal structural member in the multi-chamber fiber composite material of the present disclosure, the orthogonal structural member in the multi-chamber fiber composite material is a plate-shaped structure, wherein the structural panels are plate-shaped panels, and the chambers are distributed in a honeycomb shape or an orthogonal or heterotropic grid shape or a strip shape.

As the preferred orthogonal structural member in the multi-chamber fiber composite material of the present disclosure, the chambers are filled with the cores.

As the preferred orthogonal structural member in the multi-chamber fiber composite material of the present invention, the shell is a closed shell.

A film material used for processing an orthogonal structural member in a multi-chamber fiber composite material is as follows: a film material is characterized by comprising a wax film resin layer, an adhesive resin layer and a foaming material polymer resin mixture layer, wherein the foaming material polymer resin mixture layer is formed by being coated with a foaming material polymer resin mixture, and the foaming material polymer resin mixture comprises a foaming material with the volume fraction not less than 65%. Or, a film material is characterized by comprising a viscous adhesive layer and a water-insoluble wax film layer with polymer adhesive, wherein the viscous adhesive layer includes a solvent carrier, a foaming material, a water-insoluble expandable viscous polymer adhesive and a thermosensitive molding resin, the foaming material is evenly distributed in the solvent carrier, and the volume fraction of the foaming material to the solvent carrier is not less than 50%.

The invention mainly has the following technical effects that the orthogonal structural member in the multi-chamber fiber composite material provided by the present invention adopts an orthogonal space structure in the multi-chamber, and a thermal forming process for integrating the fiber shell and the core structure, so that the orthogonal structural member has higher strength, better strength-to-weight ratio, more excellent stability and shock resistance, and a more perfect space structure. With the application of blades of wind driven generators as an example, the blade made of multi-chamber fiber composite material and the processing technology provided by the present application solve the technical problems in the prior art and promote the breakthrough progress in the fields of wind power generation and related technologies.

First, it breaks through the technical limitations of using split-strip fan blades in the prior art, and uses high-strength and light-weight large-area fiber blades as fan blades. Under the premise of ensuring the same power generation, the starting torque is greatly reduced. The wind catching area has grown exponentially, and it can be used in both natural environments with high and low wind speeds, effectively improving the efficiency of power generation.

Second, it breaks through the technical limitations of the split half-core assembly technical solution in the prior art, adopts an orthogonally formed technical solution of multi-chamber integrated molding, and the fiber shell and the plastic core can be integrated all in one through the blade manufacturing process provided by this application, as it has multiple filling cores and multiple chamber walls, it not only effectively increases the overall mechanical strength of the blade, significantly reduces the vibration and noise when the blade rotates, improves the stability of the blade during operation, but also effectively improves the tightness of the connection between the blade fiber shell and the filling core, the overall reliability of the blade is also improved. On the other hand, the technical solution of multi-chamber integral molding also makes the technical solution of the large-area blade structure become a reality in improving power generation efficiency and reducing starting torque.

Third, it breaks through the technical limitations of the non-orthogonal configuration between the plastic core and the blade panel in the prior art, the multi-chamber space structure of the panel with the chamber wall normal or perpendicular to the core can be processed while molding the fiber shell and multi-chamber. , this space structure is the strongest and most perfect structure in theory that is most conducive to improving the pressure resistance of the blade, reducing vibration and operating noise. Since the orthogonal structural members in the multi-chamber fiber composite material and the corresponding manufacturing process provided by this application does not exist in the prior art, the technical solution disclosed in this application fills the market gap and solves the technical problems existing in the prior art. It has obvious technological progress and social, economic and environmental protection significance.

**In** order to make the technical solutions and technical effects of the present invention more clear and unambiguous, the orthogonal structural members and corresponding manufacturing processes in the multi-chamber fiber composite material disclosed in the present invention will be described in details below in conjunction with the accompanying drawings and specific embodiments.

### BRIEF DESCRIPTION OF THE DRAWINGS

FIG. 1: Overall perspective view of the blade structure in the first preferred embodiment;
FIG. 2: AA sectional view in FIG. 2;
FIG. 3: Schematic diagram of the blade manufacturing process in the first preferred embodiment;
FIG. 4: Blade structure in the second preferred embodiment overall perspective view;
Figure 5: Schematic diagram of the honeycomb chamber in the third preferred embodiment
Figure 6: Illustration of the internal orthogonal structure in this application;
Figure 7: Schematic diagram of the three-layer film material structure;
Figure 8: Two layers schematic diagram of the film material structure. Signs description:
   A^{*}-viscous adhesive layer, B-water-insoluble wax film layer with polymer adhesive; 1-wax film resin layer, 2- adhesive resin layer, 3- foam material Polymer resin mixture layer;
   10-shell, 20-core;
   110-structure panel, 120-chamber, 130-chamber wall.

### DETAILED DESCRIPTION OF THE PREFERRED EMBODIMENTS

### Preferred Embodiment 1: Wind turbine blades

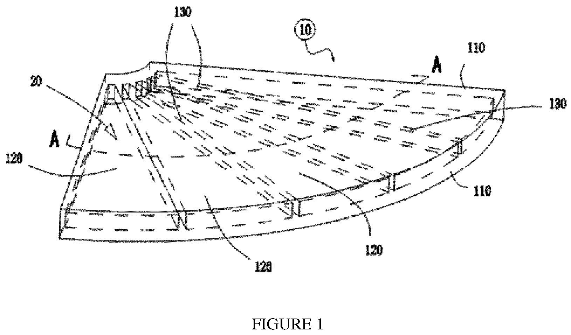

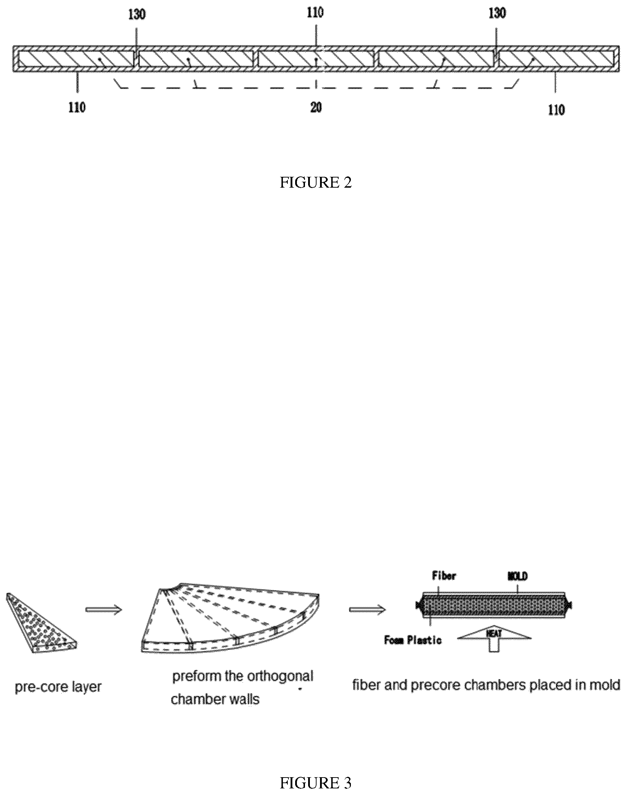

Please refer to FIGS. 1 and 2 for the application of Preferred Embodiment 1 of the present application which discloses a fan-shaped multi-chamber fiber composite material blade including a closed shell 10, the shell 10 includes two structural panels 110(i.e. blade panels). When assembling the rotor of the wind turbine, the two structural panel blades 110 respectively form the front panel and the rear panel of the blade; the shell 10's overall shape is fan-shaped, its surface area is 6-10 times of the existing strip-shaped fan blades of the same length, which is beneficial to increase the wind catching area of the blades on a large scale.

The shell 10 inner is provided with five cone type chamber 120, the chamber 120 extending radial direction of along the shell 10, uniformly distributed the circumferential direction of along the shell 10. In the five chamber 120, every two adjacent chambers 120 is set with The chamber wall 130, a chamber wall 130 perpendicular to the inner panel structure 110. The materials of the shell 10 and the chamber wall 130 are all carbon fiber composite materials; the chamber 120 is provided with a core formed of foam plastic 20, and the core 20 fills the chamber 120; the structural panel 110, the chamber 120 the chamber wall body 130 and the core 20 are integrally formed by thermoforming process of the fiber material and foam plastic shown in FIG. 3, that is, by the manufacturing process of the orthogonal structural parts in the multi-chamber fiber composite material claimed in this application.

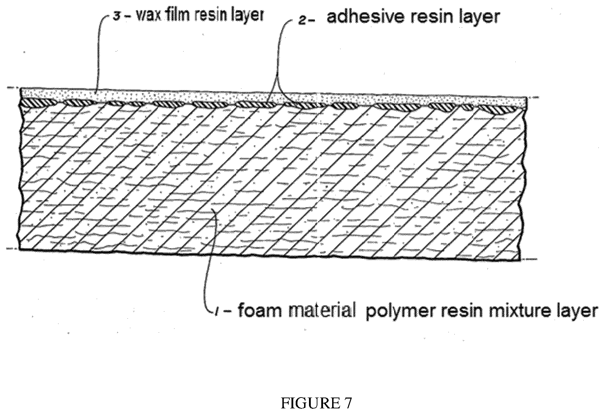

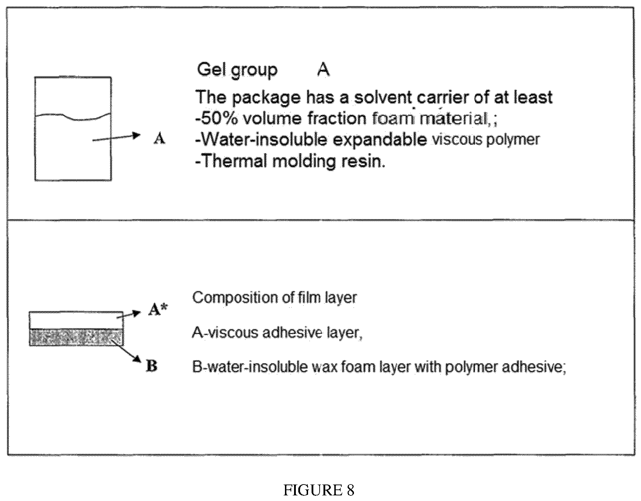

Please refer to FIG. 3, the manufacturing process of the orthogonal structural member in the multi-chamber fiber composite material provided by the present application includes the following steps: a pre-core plastic body preparation step, using a thin film material to make a foam material chamber for containing the foam material, and fill a proper amount of foaming material into the foaming material chamber to prepare the pre-core plastic body. The thin film material may be various film including optical film, composite film, superconducting film, polyester film, nylon film, plastic film, fiber film, wax paper film, foam material film, etc., as long as it has good molding characteristics which can be used to prepare a pre-core plastic body with an appropriate shape according to the specific structure of the orthogonal structural members in the multi-chamber fiber composite material, which can be applied to the pre-core plastic body preparation step. The thin film material used in this embodiment is a dedicated film material independently invented by the inventor, please refer to FIG. 7, which includes a wax film resin layer, an adhesive resin layer and a foamed material polymer resin mixture layer; foamed material polymer resin. The mixture layer is formed by coating a foaming material polymer resin mixture. The foaming material polymer resin mixture contains a foaming material and a gel-type polymer resin and the volume fraction of the foaming material is not less than 65%. Specifically, the gel-type polymer resin may be a resin gel containing a hydrocarbon solvent such as ethylene-vinyl acetate copolymer or floor glue, caulking glue, etc.; with a wax film resin layer, an adhesive resin layer, and a foaming material polymerization, the thin film material of the resin mixture layer not only has good molding characteristics, but also can be made into a pre-core plastic body with an appropriate shape according to the specific structure of the orthogonal structural members in the multi-chamber fiber composite material, and can also prevent the foaming material in the fibrous material layer degrades and shrinks during heating and curing. Because the hot-melt, forming and curing process of the fiber material layer often takes tens of minutes or even hours, if the foam material used in the pre-core plastic does not have the function of preventing the core from degrading and shrinking, the ideal multi-chamber fiber cannot be generated orthogonal space architecture in composite materials. According to actual detection and theoretical analysis, the optimal technical parameters of the foamed polymer resin mixture layer in the thin film material are: thermal conductivity 3W/mk, heat capacity 1J/gk, dielectric strength 200 VAC/mil, operating temperature between-68 and 395 degrees Fahrenheit, the dissipation factor is 0.002/100 kHz. In some improved embodiments, another special thin film material independently invented by the inventor may be used in the manufacturing process of the orthogonal structure in the multi-chamber fiber composite material provided by the present invention, please refer to FIG. 8, which includes a viscous shape adhesive layer and water-insoluble wax film layer with polymer adhesive, viscous adhesive layer coated on water-insoluble wax foam layer with polymer adhesive; The viscous sticky contact layer includes solvent carrier, foam material, water-insoluble expandable viscous polymer adhesive, and thermosensitive molding resin; wherein the solvent carrier is a resin gel or floor glue, caulk, etc., the foam material is uniformly distributed in the solvent carrier and the volume fraction in the solvent carrier is not less than 50%. The thin film material with viscous adhesive layer and water-insoluble wax foam layer with a polymer adhesive can also prevent the foam material from degrading and shrinking during the heating and curing of the fiber material layer, resulting in a perfect multi-chamber orthogonal spatial architecture in the core.

Pre-core plastic body molding step, put the pre-core plastic body produced in several pre-core plastic body preparation steps into the mold according to the predetermined spatial layout or the required spatial layout (in this embodiment, it is along the diameter, extended evenly along the circumferential direction) and are completely encapsulated with a layer of fiber material. The specific operation may be: setting a fiber material layer in the mold, placing several pre-core plastic bodies produced in the pre-core plastic body preparation step into the mold the spatial layout showed by FIG. 3, and using the fiber material layer to encapsulate the pre-core plastic body completely; alternatively, a plurality of pre-core plastic bodies can be completely encapsulated using the fiber material layer according to the spatial layout showed by FIG. 3, and then the encapsulated pre-core plastic body together with the fibers material layers loaded into the mold.

The steps of all in one molding the fiber shells and core architecture : the temperature of the mold cavity has to be raised and lower to melting temperature and curing temperature matching the fiber material layer and the foaming material, under the action of the inflation pressure of the foaming material, the chamber wall 130 and the structural panel 110 molded synchronically, formed the shell 10 with a comprising a plurality of chambers core 120; at the same time, the foamed material in the pre-core plastic body is filled in each core 120, formed chamber wall 130 in the orthogonal to the multi-chamber space structure of the structural panel 110.

Any foamed plastic material available can be used as the core material in this application, as long as it can maintain a certain pressure before the carbon fiber material or glass fiber material is cured, so that the chamber wall 130 formed in thermoforming process is orthogonal to the structural panel 110, which can be applied to the technical solution provided by this application and achieve the desired technical effect. For example, in this preferred embodiment with a monomer particle size between 10-30 microns, a monomer density between 1.03 g / cm³ and an expansion coefficient between 50 and 70, the foaming material is used as the core material; it has achieved the perfect synchronous molding effect of the fiber shell and the core structure. The foamed material used in this preferred embodiment can maintain a certain pressure before the carbon fiber material or glass fiber material is cured (specifically, it can maintain the intensity of pressure of not less than 7 kg/cm² before 70°C), so that the chamber wall 130 formed in thermoforming process may be internally orthogonal to the structural panel 110. If the foamed material used cannot maintain a certain pressure before the fiber material is cured, the chamber wall will not be orthogonal or perpendicular to the structural panel, which will affect the technical performance of the finished product, such as wind strength and starting torque, and low-speed wind capture efficiency as well as other technical parameters. Without loss of generality, any other foamed plastics, foamed plastics combination or foamed plastics and other materials available can maintain a certain pressure before the carbon fiber material or glass fiber material is cured, on the premise that the wall of the chamber formed in thermoforming process is orthogonal to the blade panel, it can be used as the core material in this application. Therefore, all replacements or deformations using other foaming plastics, the combination of foamed plastics, or the combination of foamed plastics and other materials are within the scope of the present invention. Preferably, the monomer particles of the foamed material used in the present application have a microcapsule structure which includes a capsule shell made of plastic material, and the foamed material is encapsulated in the capsule shell. Since the microcapsule particles are dispersed evenly and the foamed material is released quickly and concentrated after melting, the foamed material with microcapsule structure has the technical characteristics of uniform heating, fast thermal conductivity, and good foaming synchronization.

With the continuous growth of the scale of wind power generation and the continuous exploration of the application environment, the volume and structure of wind blades also need to be constantly changed to adapt to the changes in scale and application scenarios, these demand higher requirement for blades research institutes and manufactures. While different from the traditional strip-shaped blade design concept, the inventor of the present application found that high-strength, lightweight fan-shaped blades not only help to improve the capture efficiency of wind energy, but also make the application of low wind speed, low altitude and low torque becomes possible. On the premise of equal blade lengths, the effective wind-catching area of the fan-shaped multi-chamber fiber composite material blade provided by the present application is 6-10 times that of the traditional strip-shaped blade. In the prior art, the traditional wind blade with a semi-core structure, taking a power of 5 kw and the blade length of 9 feet as an example, the surface area of the blade is about 15 square feet. Using the fan-shaped multi-chamber fiber composite material blade provided by the present application under the same premise that the surface area is also 15 square feet, the length of the wind blade is only 2.5 feet. It is actually detected, in the 5kW application generator set, the composite multi-chamber fiber fan-shaped blade of the present application provides 11-13 miles/hour wind speed, at 1000-1600 rev/minute operation, can provide a wind fan speed of 3000 rev/min and under wind speed of 3 miles/hour condition, offer 0.1NM very low starting torque, the total weight of the fan is only 15kg. So, the multi-chamber fiber composite orthogonal blade the present invention provides, can still maintain continuous energy production under normal operation at low wind speeds.

Through the manufacturing process of the orthogonal structural parts in the multi-chamber fiber composite material provided by the present invention, the blades with the multi-chamber structure and the core wall orthogonal to the blade panel can be prepared. The multi-chamber wall body and the orthorhombic structure in the fiber composite blade is the fiber composite material leaf structure with the highest strength and the most optimized strength-to-weight ratio. Taking the application of 685g total weight as an example, the thickest part of the blade has a size of 7mm and the thinnest part has a thickness of 3mm.

In the multi-chamber fiber composite material structure provided by the present invention and the manufacturing process thereof, the multi-chamber space structure and the fiber shell are integrally formed by thermoforming process of fiber material and foamed plastic. The foam used to form the core can maintain a certain pressure before the carbon fiber material or the glass fiber material solidifies, so that multiple chamber walls that are orthogonal to the blade panel can be simultaneously formed in thermoforming process.

Various fiber composite material processing techniques in the prior art cannot produce the fiber shell structure of the orthogonal blades in the multi-chamber fiber composite material provided by the present invention and the core structure of the panel and the chamber wall orthogonal to each other. The manufactured strip-shaped blades also cannot reach the mechanical strength and strength-to-weight ratio of the orthogonal blades in the multi-chamber fiber composite material provided by the present invention. In the orthogonal blades in the multi-chamber fiber composite material provided by the present invention, since the blade panels in the chamber wall are orthogonal to the blades, a large-area ultra-thin blade panel can be allowed to have sufficient strength to resist the pressure generated by wind.

In the fiber thermoformed wind blade products in the prior art, the discrete semi-core blades and the foam plastic filling structure are used to reduce the vibration and noise of the wind blade and improve the stability. For decades, there has been little innovation in the fiber thermoforming process and fan blade structure, resulting in low overall efficiency of wind power generation in recent years, relatively large input and output, and new application requirements that cannot be applied to low wind speed and low altitude power generation. This application uses high-density, low-weight foamed plastic as the core material, and adopts a fan-shaped large-area blade and an orthogonal internal space structure in the multi-chamber core, which effectively reduces the vibration and noise of the blade during high-speed operation; Improves the stability of the blades, and also has a strong wind energy capture capability and a small starting torque, which can be widely used in residential power generation and commercial buildings power generation and other application environments.

### Preferred embodiment two of the: Another application of wind turbine blades

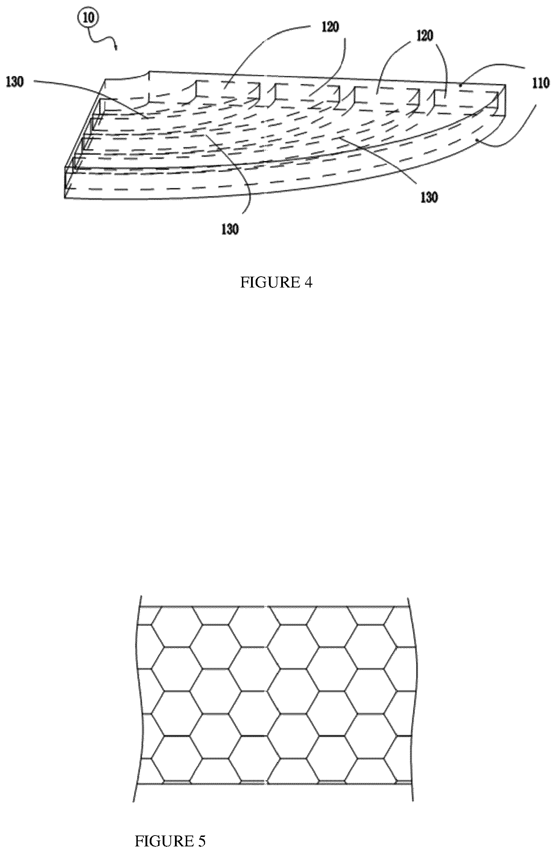

FIG. 4 shows another embodiment of the orthogonal structural member in the multi-chamber fiber composite material of the present application and its manufacturing process. In the preferred embodiment, in the shell 10 the chamber 120 and the core 20 filled in the chamber 120 are all in ring structure. The chamber 120 extends along the circumferential direction of the shell 10 and along the radial direction of the shell 10 which is evenly distributed. In accordance with the structural change of the blade, in the pre-core plastic body preparation step, the shape of the foam material chamber used to hold the foam material is also a ring structure; in the pre-core plastic body molding step, the pre-core plastic also needs to be placed in a space layout that is evenly distributed along the radial direction and extends along the circumferential direction. Other aspects are the same as the first preferred embodiment, and those skilled in the art may refer to the implementation.

Example three, preferred embodiments: the plant, chamber or other applications plate in another preferred embodiment of the invention, disclosed a high strength, lightweight internal orthogonal plate structure, it the orthorhombic structural parts or may be flat plate or curved plate or curved panel, which can be widely used to make various plates such as the floor, siding, ceiling, or shell structure of ships, vehicles, and equipment for houses or factories. Please refer to FIG. 5, the multiple chambers in the shell are honeycomb structures. In other embodiments, of course, other multi-chamber space architectures can also be developed, such as orthogonal or oblique grid structures, etc. The multiple chambers are evenly distributed in the shell, and the chamber walls are orthogonal to the panel of the shell. To adapt to structural changes, in the pre-core plastic body preparation step, the shape of the foam material chamber used to hold the foam material is also a honeycomb unit structure; in the pre-core plastic body molding step, the pre-core plastic body needs to be placed according to the spatial structure of the three-dimensional honeycomb and encapsulated with a layer of fiber material. Other aspects are basically the same as the preferred embodiment 1 and the preferred embodiment 2, and those skilled in the art can refer to the implementation.

The preferred embodiments four: using a conventional wind turbine blade or knife strip wind according the present application is preferably within the multi-chamber fiber and a composite material according to the second preferred embodiment disclosed in the style of an orthogonal blade embodiment rotor to turbines, the blades will undoubtedly achieve very beneficial technical effects. One of the most simple and feasible technical solutions is to give the existing air knife blades a fiber composite material with a multi-chamber orthogonal structure, so that the existing air knife blades have not only the various advantages already mentioned in this application, but also perfect adapt to the various supporting facilities that have been installed. Therefore, the manufacturing process of the orthogonal structure parts in the multi-chamber fiber composite material disclosed in the present application and the direct application of the corresponding orthogonal structure parts in the multi-chamber fiber composite material in the traditional air knife blade also belong to the protection scope of the present application.

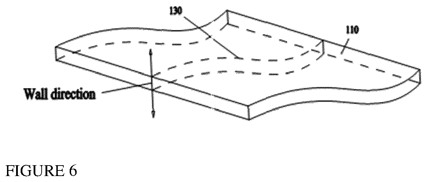

It should be noted that the various embodiments and changed embodiments introduced above are mostly based on the application of planar structure panels. However, the solution provided by this application is not limited to the application of planar structure panels. Please refer to FIG. 6. FIG. 6 shows an irregularly curved structural member. The irregularly curved structural member has an irregularly curved structural panel. The irregularly curved structural member also has the protection claimed in this application. And has technical characteristics of orthogonal structural parts within the multi-chamber fiber composite material. Therefore, the understanding of the internal orthogonality described in this application is not limited to the vertical structure of the planar structure panel, but also includes the orthogonal structure of the irregularly curved structure panel in the three-dimensional space.

## Claims

1. A manufacturing process of an orthogonal structural member in a multi-chamber fiber composite material, including the steps of preparing preformed core bodies, wherein a film material is used for making a foam material chamber containing a foaming material, and the foaming material chamber is filled with an appropriate amount of foaming material to prepare the preformed core bodies; performing die-filling on the preformed core bodies, wherein several preformed core bodies made in the step of preparing the preformed core bodies are placed into a mold according to a predetermined spatial layout, and each preformed core body is encapsulated with a layer of fiber material; integrally forming the fiber shell and the core structure, wherein the temperature of a die cavity is increased, and under the expansion pressure of the foam material, the chamber walls (130) and the structural panels (110) are formed synchronously to form a structural member shell (10) including at least two chambers (120); and meanwhile, the foaming material in the preformed core bodies expands and fills each chamber (120), so as to form a multi-chamber space structure, orthogonal to the structural panels (110), in the chamber walls (130).

2. The manufacturing process of the orthogonal structural member in the multi-chamber fiber composite material according to claim 1, **characterized in that** the monomer particles of the foaming material are of a microcapsule structure, wherein the microcapsule structure includes a capsule shell made of plastic material, and the foaming material is encapsulated in the capsule shell.

3. The manufacturing process of the orthogonal structural member in the multi-chamber fiber composite material according to claim 1, **characterized in that** the film material includes a wax - resin layer (1), an adhesive resin layer (2) and a foam material polymer resin mixture layer (3), wherein the foaming material polymer resin mixture layer (3) is formed by being coated with a foaming material polymer resin mixture and comprises a foaming material with the volume fraction less than 30%.

4. The manufacturing process of the orthogonal structural member in the multi-chamber fiber composite material according to claim 1, **characterized in that** the layer material includes a viscous adhesive layer (A*) and a water-insoluble wax - layer with polymer adhesive (B), wherein the viscous adhesive layer (A*) includes a solvent carrier, a foam material, a water-insoluble expandable viscous polymer adhesive and a thermosensitive molding resin, the foaming material is evenly distributed in the solvent carrier, and the volume fraction of the foaming material to the solvent carrier is not less than 30%.

## Patentansprüche

1. Ein Verfahren zur Herstellung eines orthogonalen Strukturelements in einem Mehrkammer-Faserverbundmaterial, das folgende Schritte aufweist:
Vorbereiten von vorgeformten Kernkörpern, wobei ein Filmmaterial zum Herstellen einer Schaummaterial-Kammer verwendet wird, die ein Schaummaterial enthält, und wobei die Schaummaterial-Kammer mit einer geeigneten Menge an Schaummaterial gefüllt wird, um die vorgeformten Kernkörper vorzubereiten;
Durchführen von Formfüllen der vorgeformten Kernkörper, wobei mehrere vorgeformte Kernkörper, die in dem Schritt des Vorbereitens der vorgeformten Kernkörper hergestellt wurden, gemäß einer vorbestimmten räumlichen Anordnung in eine Form platziert werden, und wobei jeder vorgeformte Kernkörper mit einer Schicht aus Fasermaterial verkapselt wird;
integrales Ausbilden der Faserhülle und der Kernstruktur, wobei die Temperatur eines Formhohlraums erhöht wird, und
wobei unter dem Expansionsdruck des Schaummaterials die Kammerwände (130) und die Strukturpaneele (110) synchron ausgebildet werden, um eine Strukturelement-Hülle (10) auszubilden, die wenigstens zwei Kammern (120) aufweist; und
wobei gleichzeitig das Schaummaterial in den vorgeformten Kernkörpern expandiert und jede Kammer (120) füllt, um eine Mehrkammer-Raumstruktur auszubilden, die orthogonal zu den Strukturpaneelen (110) in den Kammerwänden (130) ist.

2. Das Verfahren zur Herstellung des orthogonalen Strukturelements in dem Mehrkammer-Faserverbundmaterial nach Anspruch 1, **dadurch gekennzeichnet, dass** die Monomerteilchen des Schaummaterials aus einer Mikrokapselstruktur bestehen,
wobei die Mikrokapselstruktur eine Kapselhülle beinhaltet, die aus Kunststoffmaterial hergestellt ist, und
wobei das Schaummaterial in der Kapselhülle verkapselt ist.

3. Das Verfahren zur Herstellung des orthogonalen Strukturelements in dem Mehrkammer-Faserverbundmaterial nach Anspruch 1, **dadurch gekennzeichnet, dass**
das Filmmaterial eine Wachsfilm-Harzschicht (1), eine Klebeharzschicht (2) und eine Schaummaterial-Polymer-Harz-Mischungsschicht (3) aufweist, wobei die Schaummaterial-Polymer-Harz-Mischungsschicht (3) durch Beschichten mit einer Schaummaterial-Polymer-Harz-Mischung ausgebildet wird, und
wobei die Schaummaterial-Polymer-Harz-Mischung ein Schaummaterial mit einem Volumenanteil von weniger als 30% aufweist.

4. Das Verfahren zur Herstellung des orthogonalen Strukturelements in dem Mehrkammer-Faserverbundmaterial nach Anspruch 1, **dadurch gekennzeichnet, dass**
das Schichtmaterial eine viskose Klebeschicht (A*) und eine wasserunlösliche Wachschicht mit Polymerklebstoff (B) aufweist,
wobei die viskose Klebeschicht (A*) Folgendes aufweist:
einen Lösungsmittelträger, ein Material aus Schaum, einen wasserunlöslichen expandierbaren viskosen Polymerklebstoff und ein thermosensitives Formharz,
wobei das Schaummaterial gleichmäßig in dem Lösungsmittelträger verteilt ist, und
wobei der Volumenanteil des Schaummaterials zu dem Lösungsmittelträger nicht weniger als 30% beträgt.

## Revendications

1. Procédé de fabrication d'un organe structural orthogonal en un matériau composite fibreux à multiples chambres, comportant les étapes de la préparation de corps de noyau préformés, dans lequel un matériau de film est utilisé pour constituer une chambre de matériau en mousse contenant un matériau moussant, et la chambre de matériau moussant est remplie d'une quantité appropriée de matériau moussant pour préparer les corps de noyau préformés ; la réalisation d'un remplissage à la filière sur les corps de noyau préformés, dans lequel plusieurs corps de noyau préformés constitués lors de l'étape de préparation des corps de noyau préformés sont placés dans un moule selon une disposition spatiale prédéterminée, et chaque corps de noyau préformé est encapsulé avec une couche de matériau fibreux ; la formation intégrale de la coque fibreuse et de la structure de noyau, dans lequel la température d'une cavité de filière est augmentée, et sous la pression de dilatation du matériau en mousse, les parois de chambre (130) et les panneaux structuraux (110) sont formés de manière synchrone pour former une coque d'organe structural (10) comportant au moins deux chambres (120) ; et dans le même temps, le matériau moussant dans les corps de noyau préformés se dilate et remplit chaque chambre (120), de manière à former une structure spatiale à multiples chambres, orthogonale aux panneaux structuraux (110), dans les parois de chambre (130).

2. Procédé de fabrication de l'organe structural orthogonal en le matériau composite fibreux à multiples chambres selon la revendication 1, **caractérisé en ce que** les particules de monomère du matériau moussant ont une structure de microcapsule, dans lequel la structure de microcapsule comporte une coque de capsule constituée de matériau plastique, et le matériau moussant est encapsulé dans la coque de capsule.

3. Procédé de fabrication de l'organe structural orthogonal en le matériau composite fibreux à multiples chambres selon la revendication 1, **caractérisé en ce que** le matériau de film comporte une couche de cire-résine (1), une couche de résine adhésive (2) et une couche de mélange de résine polymère et matériau en mousse (3), dans lequel la couche de mélange de résine polymère et matériau moussant (3) est formée en étant revêtue d'un mélange de résine polymère et matériau moussant et comprend un matériau moussant ayant la fraction volumique inférieure à 30 %.

4. Procédé de fabrication de l'organe structural orthogonal en le matériau composite fibreux à multiples chambres selon la revendication 1, **caractérisé en ce que** le matériau en couches comporte une couche adhésive visqueuse (A*) et une couche de cire insoluble dans l'eau avec un adhésif polymère (B), dans lequel la couche adhésive visqueuse (A*) comporte un support de solvant, un matériau en mousse, un adhésif polymère visqueux dilatable insoluble dans l'eau et une résine de moulage thermosensible, le matériau moussant est réparti uniformément dans le support de solvant, et la fraction volumique entre le matériau moussant et le support de solvant n'est pas inférieure à 30 %.
